# EUROPEAN PATENT SPECIFICATION

(11) **EP 1 366 675 B1**
(45) Date of publication and mention of the grant of the patent: **17.01.2007**
(21) Application number: 03252716.0
(22) Date of filing: 30.04.2003
(51) Int. Cl.: A23L 1/275, C09C 1/24, C01G 49/04, C01G 49/06, A61K 6/06

(54) **Aqueous composition containing high purity iron oxide**
Wässrige Zusammensetzung enthaltend Eisenoxid hoher Reinheit
Composition aqueuse contenant de l'oxyde de fer de haute pureté

(30) Priority: 29.05.2002 US 156637
(43) Date of publication of application: 03.12.2003
(73) Proprietor: Elementis Pigments, Inc., East St.Louis, IL 62204 (US)
(72) Inventor: Lister, Rebecca, St.Louis, MO 63129 (US); Podolsky, George, Kirkwood, MO 63122 (US); Furness, Greg, St. Louis, MO 63144 (US); Gevemuehle, Rick, Arnold, MO 63010 (US); Dunbar, Frank, O'Fallon, IL 62269 (US)
(74) Representative: Hucker, Charlotte Jane

(56) References cited:
- DE-A- 3 209 469
- US-A- 4 828 826
- US-A- 4 911 760
- US-A- 5 885 545

## Description

### FIELD OF INVENTION

The present invention is directed to an aqueous composition containing high purity iron oxide pigments. The compositions involved are particularly useful for providing coloration and other properties to a large variety of pharmaceutical, food, pet food, cosmetics, personal care products and other systems where high purity, high quality products are necessary and where the customer desires a liquid product to incorporate into such customer's manufacturing processes.

### BACKGROUND OF INVENTION

### In General

Since at least the middle of the Nineteenth Century to the very present day, iron oxide has been used as the pigment of choice in an ever expanding and increasing variety of systems. Natural iron oxide, actually was mined and used in paints before the American Civil War and such paint use continues, on a very large scale, into the Twenty First Century. Waxes, coatings, inks, paper and a growing number of other new products continue to depend on iron oxide to provide the bright colors which some people believe define the vividness of modernity and our present time.

Most recently iron oxide (and chromium oxide) have been used in the pigmentation of cosmetic and pharmaceutical products. Metal oxide pigments have been used in the form of a powder in these businesses until very recently when customer preferences for a liquid formulation became known.

Powdered metal oxide pigments are dusty, thereby giving rise to health hazards and making storage and handling difficult. Also, the powders are not free flowing and so cannot readily be conveyed through pipes, which become blocked by the powder. Further, the poor flowing properties of powders makes it hard to meter them using for example auger screws to ensure the correct proportion of pigment to base material.

An increasing number of iron oxide customers have simultaneously been expressing a preference for relatively new high purity iron oxides. This iron oxide product is manufactured to meet more modern rigid standards of reduced trace elements; many of which elements either have been identified with health problems or are of a type not applicable to uses where food or skin contact is involved.

### Prior Developments

Similar powder problems are known in other industries (e.g., in the concrete industry). Such problems have been solved to a substantial extent by granulating iron oxide products into large size granules 100s of times larger than iron oxide pigment particles. Granules have been difficult to optimize and are the subject of an ongoing investigation by many companies with much prior art reflecting the search for a process that is both effective in producing useful granules and is relatively inexpensive to implement.

Most cosmetic, pharmaceutical, and food customers however have resisted granules and have expressed a preference for a liquid iron oxide delivery system which would provide ease of use in the customer's manufacture. Many systems such as cosmetic and pharmaceutical making are largely liquid and pumpable/pourable raw materials in a water base would be very welcome.

U.S. Patent No. 5,401,313 issued to Elementis Pigments, Inc., the assignee ofthis invention, describes a spray drying process wherein a granule is created with an added step of coating the iron oxide pigment particles with electric charges through use of a coating is utilized. The granules of iron oxide is presently useful in coloring concrete.

U.S. Patent No. 5,853,476 also issued to Elementis Pigments, Inc., shows a compaction process relying in a preferred embodiment on Bepex MS compactors to make iron oxide granules. While very effective, the process is relatively expensive. The patent teaches the use of recycling of oversize and undersize material streams in a process that both creates enhanced color saves the cost of waste disposal. The final product is a solid granule.

Water-based compositions comprising iron oxide are known in the art. For example, US 4,828,826 discloses a cosmetic formulation comprising a cosmetically compatible adjuvant and particles of a synthetic platelet-shaped iron oxide pigment.

Also, US 5,885,545 discloses the production of yellow, transparent iron oxide pigments and their use in the colouring of lacquers and plastics. US 4,911,760 discloses the preparation of iron oxide red pigments comprising clusters of a plurality of pigment particles, which may be used in the colouring of foodstuffs, lacquers, plastics and building materials.

### OBJECT OF THE INVENTION

It is an object of the present invention to produce an aqueous dispersion of high solids content high purity iron oxide that is readily and very rapidly dispersible in a base medium, thereby eliminating dusting.

A first aspect of the present invention is, therefore, directed to an aqueous composition which is useful for providing colouration and which comprises from 20 to 95% by weight of water and from 5 to 80% by weight of iron oxide pigment. The pigment has an average particle diameter of from about 0.01 to 1.30 µm, a specific surface area of from 3.0 to 200 m²/gram and a specific gravity of from 3.20 to 5.20. The pigment contains lead not to exceed 20 ppm, arsenic not to exceed 5 ppm and mercury not to exceed 3 ppm, and is dispersed in the aqueous composition. In addition, the aqueous composition comprises one or more preservatives.

According to a further aspect of the present invention, a method of making an aqueous composition useful for providing colouration comprises preparing iron oxide pigment as defined above and mixing the iron oxide pigment into water in an amount of from 20 to 95% by weight thereby forming an aqueous composition.

The inventive products may be sord to customers as coloring ingredients in, for example, cosmetic, food, pet food, and pharmaceutical formulae.

### DETAILED DESCRIPTION OF INVENTION

According to the present invention, there is provided an aqueous dispersion of high purity iron oxide pigment preferably containing one or more preservatives.

The aqueous composition ofthis invention is a composition where water comprises from 20% to 95% by weight of the total composition - when we use the word aqueous, we mean a liquid system based on water. The water preferably used is itself of high purity and clarity. Mineral water including Evian^{™} and Evian^{™}-type water can be used in high end dispersions targeted to the cosmetic industry particularly lipsticks, face creams, rouges and mascaras. Water obtained from artesian wells or other sources not affected by urban pollution is also preferred. Preferred for most food and pharmaceutical uses however would be tap water preferably subjected to at least one secondary impurity treatment.

The present invention relates to a iron oxide suspension with high solids content and to a process for the preparation thereof. Preferably, the composition of the present invention comprises less than 60 weight % and more preferably less than 25 weight % iron oxide pigment, as based upon the mass of the composition. The present invention uses as the starting material high purity iron oxide pigment prepared for example through the reaction of iron salts with an oxygen-containing gas in a reactor utilizing well known processes for manufacturing iron oxide, slurried in water with or without the use of a dispersing agent.

The key to high purity lies generally in special selection of raw materials used to make a purified iron starting solution to make the iron oxide. Raw materials include specifically selected steel and acid. Steel selected for purity includes steel free of organic contaminants and low in heavy metals, for example, stampings from steel cans used for food products. Acids are selected from, for example, sulfuric and hydrochloric acid, that has not been regenerated from heavy metals containing processes.

Representative manufacturing processes to make high purity iron oxide can vary. Generally the processes may be categorized into two types: 1) precipitation; and 2) thermal decomposition, such as calcination and gas phase chemical vapor deposition. Some products can be manufactured by a combination of these two general process routes.

### 1) Precipitation - general description

Yellow, red, and black iron oxides are precipitated products that rely on careful control of a complex series of liquid-solid, gas-solid, and gas-liquid reactions. Nucleation and precipitation/crystallization kinetics are the preferred key to preparation of the correct chemical composition, particle size, particle size distribution, particle morphology, and ultimately, the desired color.

Both the yellow (goethite) and red (hematite) products are made from a modified version of the Penniman-Zoph process in which a nucleus or seed particle is grown to a target size. The source of the nutrient for this particle growth is continuously provided by dissolution of iron. The iron is a specially-selected grade that is dissolved in an acidic ferrous sulfate solution and oxidized with finely-dispersed air. The primary distinction between the yellow and red processes is in the nature of the seed particle.

The following representative reactions (not balanced) depict the seed and growth (generation) stages of precipitation processes:

### SEED:

NaOH + FeSO₄ → Fe(OH)₂ + Na₂SO₄

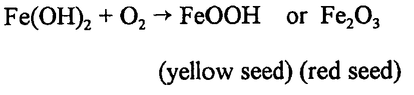

### GENERATION:

H₂SO₄ + Fe → FeSO₄ + H₂

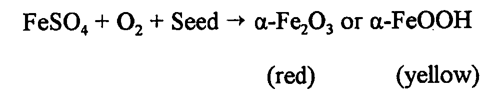

Following the seed generation stage, the yellow or red iron oxide slurry is filtered, washed, dried, milled, and packaged. An alternative yellow and red iron oxide process is a direct precipitation route. In such a process the nutrient is a preferred iron salt solution rather than the specially selected iron.

The black iron oxide process resembles the "Seed" phase of the reactions but must be conducted at a higher temperature and pH to precipitate magnetite:

NaOH + FeSO₄ → Fe(OH)₂ + Na₂SO₄

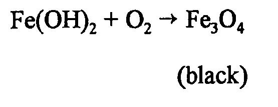

Terminal stage operations are similar to the yellow and red processes.

### 2) CALCINATION - general description

Solid state reactions with strict control of gas-solid equilibria characterize the calcination manufacturing processes used to prepare the red and copperas red iron oxide product lines.

Calcination of yellow iron oxide is a dehydroxylation of the oxyhydroxide to yield red iron oxide as depicted in the following reaction.

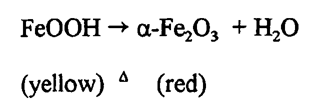

The copperas reds are prepared by a process that results in a hematite with the highest chemical purity and chroma.

A purified ferrous sulfate solution is further purified during evaporation and crystallization stages. The ferrous sulfate heptahydrate crystals (FeSO₄•7H₂O), also known as "copperas," are dried and dehydrated to ferrous sulfate monohydrate (FeSO₄•H₂O). The monohydrate is then oxidized during a calcination step to the hematite (α-Fe₂O₃) or copperas red iron oxide particle. The by-product sulfur gases are recycled to the contact sulfuric acid plant. Further purification is achieved during subsequent washing steps followed by filtration, drying, milling and packaging.

The process can be summarized by the following chemical reaction (not balanced):

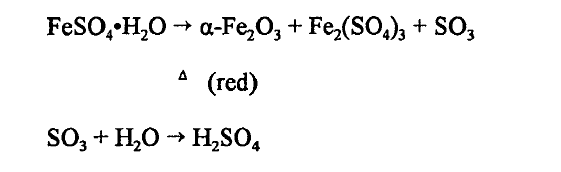

The inventive process comprises mixing (e.g. blending, grinding and dispersing) such high purity iron oxide pigment made as described above, or by other known processes, with water to form an aqueous composition. Useful for the high purity iron oxide pigments of the invention are a family of pigments made by the assignee of this invention and sold under the TruPure trademark, for example Tru Pure R2199 AP, a red iron oxide. Rockwood Specialties makes a yellow high purity iron oxide sold under the description Y5OEC also useful for this invention. Bayer GmbH makes a yellow product (920Z) also useful. BASF, a large German chemical company, makes a high purity black iron oxide useful for mascara called Sicovit Black 80E172.

Useful products include red, copperas red, black, green, blue-green, yellow, brown and blends therefore. These iron oxide pigments have the following technical specification or characteristics. It is to be understood that such individual pigment particles (because of their very small size) can "clump" together to form larger pigment agglomerates.
1. Average particle size - from 0.01 to 1.30 µm
2. Specific surface area - from 3.0 to 200 m²/gram
3. Specific gravity - from 3.20 to 5.20

In order to be useful in the dispersions of this invention particularly for cosmetic, pharmaceutical, food including pet food, tobacco and personal care customers, these products must critically contain pigment with substantially lower maximum levels of impurity levels than normal as follows:
1. Not to exceed 20 ppm lead preferably not to exceed 10 ppm
2. Not to exceed 5 ppm arsenic preferably not to exceed 3 ppm
3. Not to exceed 3 ppm mercury preferably not to exceed 1 ppm

Useful high purity iron oxide particles are formed using known techniques such as previously described, such that the resultant pigments have acceptable, i.e. reduced, levels of trace metals such as arsenic, mercury and lead. These levels are substantially lower than those found in iron oxide sold for use in the paint and coatings industry for example, where toxicity is not a primary concern. Pigments, having the requisite levels of these trace metals for use in the present invention, are therefore referred to in the present specification as substantially "pure" or as "high purity". This substantially "pure" material is suitable for application to human skin since the trace metal content is maintained at or below the levels set forth above, that is, below levels which are very, very unlikely to cause dangerous effects in humans or animals.

Dispersants and other chemicals may be added to the inventive aqueous compositions including grinding aids such as glycerine, preservatives such as potassium sorbates, citric acid and combinations thereof to produce sorbic acid, anti-settling additives, wetting agents such as lecithin, flavor ingredients, other pigments such as zinc oxide and titanium dioxide, and rheological additives just for example. Preferably, the inventive composition additionally comprises one or more chemicals selected from the group consisting of dispersants, anti-settling agents, flavour ingredients and rheological additives. Preservative - containing dispersions, wherein the one or more preservatives are selected from the group consisting of potassium sorbates, citric acid, sorbic acid and mixtures thereof are preferred. The dispersions typically should as a rule not contain appreciable amounts of organic solvents such as propylene glycol, xylene, toluene, or herbicides and biocides.

In a preferred embodiment, substantially pure iron oxide particles having a substantially spherical shape are used in the inventive composition. A variety of other shapes, such as acicular, oval and rhomboids have also been found to provide acceptable cosmetic use, however, any shape may be utilized in the formulations of the invention as well, although as noted above, spherical particles are the most preferred.

The "purity" of these iron oxide pigments renders formulations containing this material suitable for application to human skin without danger due to transdermal absorption of trace metals. It also permits use in foods of an ingredient of great safety and effectiveness in providing color to such formulation. In addition the invention provides an aqueous vehicle of great pumpability and flowability to permit a customer flexibility in manufacture without the safety or environmental risks involved in the handling of powder.

The dispersions of the invention may be incorporated by known mixing methods into a variety of cosmetic products such as lipstick, eyeshadow, foundations, moisturizers, rouges and the like to form cosmetics having an increased acceptance to discerning health-oriented customers. They are also particularly useful for food and pet food companies who want to impart coloring to their products to provide, for example, a "meaty look" for dog and cat food without any likelihood of harm to pets. The compositions of the present invention may also be incorporated into tobacco products.

Iron oxide particles of the size and morphology described herein, with such reduced levels of trace metal contamination, have been previously known in the art. Dispersions of low purity iron oxide pigments in water have also been known since at least the early 1900's and "relatively" high purity type iron oxides has been available on the market since the 1930's. It is speculated that persons in the art believed that adding such iron oxides to water would result in an unpure dispersion because of the generation of harmful acids. It is also believed that chemists working in the field thought that undesirable side reactions of the iron oxide would occur in water decreasing their purity and that a liquid dispersion in water would promote the formation of mold, fungus, or microbial activity.

There is no teaching or suggestion that applicants are aware of to utilize iron oxide particles of the type described herein in an aqueous dispersion for applications such as those contemplated by applicants, namely as a component of: 1) cosmetic formulations, 2) food compositions, 3) pharmaceuticals and 4) pet foods particularly foods made for cats, dogs and other domestic animals capable of providing an enhanced degree of satisfaction. Thus the use of applicants' pure iron oxide dispersion in the manner indicated provides unexpected results with regard to the ability of this material to afford the customer both ease of handling and satisfaction of having met all environmental concerns.

### EXAMPLE I:

In this Example, the percentages stated are by weight based on the weight of the pigment used. The following steps are used to illustrate the invention herein.

### Step 1 - Mixing

### Components:

1. 5-80% by weight (preferably 20-60%) high purity iron oxide pigment (red, yellow, black, brown or blends).
2. 20-95% by weight of water.
3. 0-5% by weight (preferably 3%) of one or more preservatives.
4. 0-15% by weight (preferably 8%) of one or more dispersants.
5. 0-15% by weight (preferably 8%) of one or more anti-settling additive.

Iron oxide was loaded into a media mill where liquid mixture of water and other ingredients were added. Mixing preferably occurs using a high-speed disperser or media mill; time of mixing preferably 5 minutes to 30 minutes; 100 to 3000 revolutions per minute if a high speed disperser is used.

### Discussion of Results:

The result is a high purity iron oxide dispersion that meets FDA specifications for food, pet food, cosmetics, pharmia, and personal care. It will also meet specifications for European directive E-172. The improvements include:
- Allows for batch to batch uniformity.
- Better color work up with less pigment 10-30% less pigment.
- No dusting.
- No cross contamination of equipment or raw materials.
- Less labor intensive
   - hook up pump
   - no clean up
- economical process

### Example II:

The following example shows the manufacture of a aqueous dispersion according to this invention designed to be particularly useful for pet foods.

| **Red Pigment Dispersion for Pet Food** | | | |
|---|---|---|---|
| **Raw Materials** | **grams** | **%** | **Observations** |
| water | 75 | 21.60 | - shear thins |
| glycerine 99.7% | 12 | 3.50 | - no syneresis |
| Turn on disperser | | | - no settling |
| Thermolec WFC^{a} | 25 | 7.20 | |
| High speed grind for 10 minutes 500 rpms | | | |
| High Purity Red Iron Oxide | 225 | 64.90 | |
| Slowly add pigment - This may take up to 60 minutes. | | | |
| Grind for 30 minutes (1500 - 2000 rpms). | | | |
| potassium sorbate preservative 25% wt. Soln. | 2.8 | 0.80 | |
| Let down, grind 10 minutes | | | |
| citric acid preservative 25% wt. Soln. | 6.8 | 2.00 | |
| (add drop-wise) | | | |
| Grind for 10 minutes (1500-2000 rpms). | | | |
| | **346.6** | **100.00** | |

| | | | |
|---|---|---|---|
| ^{a}Thermolec WFC is a tradename for Soybean Lecithin available from L.V. Lomas and Seltzer Chemicals. | | | |

### Physical Properties

Solids: 76.63%
Hegman: 6.0
Density: (17.15 lbs./gal.) 2.05 kg/l
pH: 4.37
Viscosity: Brookfield, #4 spdl, 60 rpms: (3200 cP) 3.2 Pa.s
Hercules: pass, 22, narrow cycle

## Claims

1. An aqueous composition useful for providing coloration comprising:
a) from 20 to 95% by weight of water; and
b) from 5 to 80% by weight of iron oxide pigment, said pigment having an average particle diameter of from 0.01 to 1.30 µm, a specific surface area of from 3.0 to 200 m²/gram and a specific gravity of from 3.20 to 5.20, and which pigment contains:
| | |
|---|---|
| lead | not to exceed 20 ppm; |
| arsenic | not to exceed 5 ppm; and |
| mercury | not to exceed 3 ppm; |
said iron oxide pigment being dispersed in said aqueous composition; and
c) one or more preservatives.

2. The composition of claim 1, wherein the iron oxide pigment contains:
| | |
|---|---|
| lead | not to exceed 10 ppm; |
| arsenic | not to exceed 3 ppm; and |
| mercury | not to exceed 1 ppm. |

3. The composition of claim 1 or claim 2, wherein said oxide pigment comprises less than 60% by weight of said composition.

4. The composition of claim 3, wherein said iron oxide pigment comprises less than 25% by weight of said composition.

5. The composition of any preceding claim, additionally comprising one or more chemical compositions selected from the group consisting of dispersants, anti-settling agents, flavor ingredients and rheological additives.

6. The composition of any preceding claim, wherein the one or more preservatives are selected from the group consisting of potassium sorbates, citric acid, sorbic acid and mixtures thereof.

7. Use as a colorant of a composition as defined in any of claims 1 to 6.

8. A formulation containing an aqueous composition as defined in any of claims 1 to 6.

9. The formulation of claim 8, selected from the group consisting of cosmetic formulations, pharmaceuticals, foods including pet foods and tobacco products.

10. A method of making an aqueous composition useful for providing coloration comprising:
a) preparing iron oxide pigment as defined in claim 1 or claim 2; and
b) mixing such iron oxide pigment into water in an amount of from 20 to 95%; thereby forming the aqueous composition.

## Patentansprüche

1. Wässrige Zusammensetzung, geeignet für die Bereitstellung von Färbung, umfassend
a) 20 bis 95 Gew.-% Wasser und
b) 5 bis 80 Gew.-% Eisenoxid-Pigment, wobei das Pigment einen mittleren Teilchendurchmesser von 0,01 bis 1,30 µm, eine spezifische Oberfläche von 3,0 bis 200 m²/g und ein spezifisches Gewicht von 3,20 bis 5,20 aufweist und dieses Pigment:
| | |
|---|---|
| Blei | nicht mehr als 20 ppm |
| Arsen | nicht mehr als 5 ppm und |
| Quecksilber | nicht mehr als 3 ppm |
enthält, wobei das Eisenoxid-Pigment in der wässrigen Zusammensetzung dispergiert ist,
und
c) ein oder mehrere Konservierungsmittel.

2. Zusammensetzung nach Anspruch 1, bei der das Eisenoxid-Pigment
| | |
|---|---|
| Blei | nicht mehr als 10 ppm |
| Arsen | nicht mehr als 3 ppm und |
| Quecksilber | nicht mehr als 1 ppm |
enthält.

3. Zusammensetzung nach Anspruch 1 oder Anspruch 2, bei der das Oxid-Pigment weniger als 60 Gew.-% der Zusammensetzung ausmacht.

4. Zusammensetzung nach Anspruch 3, bei der das Eisenoxid-Pigment weniger als 25 Gew.-% der Zusammensetzung ausmacht.

5. Zusammensetzung nach irgendeinem vorhergehenden Anspruch, die zusätzlich eine oder mehrere chemische Zusammensetzungen ausgewählt aus der Gruppe bestehend aus Dispergiermitteln, Antiabsetzmitteln, Aromastoffen und rheologischen Additiven umfasst.

6. Zusammensetzung nach irgendeinem vorhergehenden Anspruch, bei der das eine oder die mehreren Konservierungsmittel ausgewählt sind aus der Gruppe bestehend aus Kaliumsorbaten, Citronensäure, Sorbinsäure und Mischungen davon.

7. Verwendung einer Zusammensetzung wie in irgendeinem der Ansprüche 1 bis 6 definiert als farbgebendes Mittel.

8. Formulierung enthaltend eine wässrige Zusammensetzung wie in irgendeinem der Ansprüche 1 bis 6 definiert.

9. Formulierung nach Anspruch 8 ausgewählt aus der Gruppe bestehend aus kosmetischen Formulierungen, Pharmazeutika, Lebensmitteln, einschließlich Haustierfutter, und Tabakwaren.

10. Verfahren zur Herstellung einer wässrigen Zusammensetzung, geeignet für die Bereitstellung von Färbung, umfassend
a) Herstellen von Eisenoxid-Pigment wie in Anspruch 1 oder Anspruch 2 definiert und
b) Mischen dieses Eisenoxid-Pigments in Wasser in einer Menge von 20 bis 95%, wodurch die wässrige Zusammensetzung gebildet wird.

## Revendications

1. Composition aqueuse utile pour procurer une coloration, comprenant:
a) de 20 à 95% en poids d'eau; et
b) de 5 à 80% en poids de pigments d'oxyde de fer, ledit pigment ayant un diamètre moyen des particules de 0,01 à 1,30 µm, une aire de surface spécifique de 3,0 à 200 m²/ grammes et une masse volumique de 3,20 à 5,20, et lequel pigment contient:
| | |
|---|---|
| du plomb | sans excéder 20 ppm; |
| de l'arsenic | sans excéder 5 ppm; et |
| du mercure | sans excéder 3 ppm; |
ledit pigment d'oxyde de fer étant dispersé dans ladite composition aqueuse;
et
c) un ou plusieurs agents conservateurs.

2. Composition selon la revendication 1, dans laquelle le pigment d'oxyde de fer contient:
| | |
|---|---|
| du plomb | sans excéder 10 ppm; |
| de l'arsenic | sans excéder 3 ppm; et |
| du mercure | sans excéder 1 ppm. |

3. Composition selon la revendication 1 ou la revendication 2, dans laquelle ledit pigment d'oxyde constitue moins de 60% en poids de ladite composition.

4. Composition selon la revendication 3, dans laquelle ledit pigment d'oxyde de fer constitue moins de 25% en poids de ladite composition.

5. Composition selon l'une quelconque des revendications précédentes, comprenant en outre une ou plusieurs compositions chimiques choisies dans le groupe consistant en dispersants, agents anti-sédimentation, constituants de flaveur et additifs rhéologiques.

6. Composition selon l'une quelconque des revendications précédentes, dans laquelle le ou les agents conservateurs sont choisis dans le groupe consistant en sorbates de potassium, acide citrique, acide sorbique et leurs mélanges.

7. Utilisation comme colorant d'une composition telle que définie selon l'une quelconque des revendications 1 à 6.

8. Formulation contenant une composition aqueuse telle que définie selon l'une quelconque des revendications 1 à 6.

9. Formulation selon la revendication 8, choisie dans le groupe consistant en formulations cosmétiques, produits pharmaceutiques, produits alimentaires, y compris aliments pour animaux et produits du tabac.

10. Procédé pour la réalisation d'une composition aqueuse utile pour procurer une coloration, comprenant:
a) la préparation de pigment d'oxyde de fer tel que défini selon la revendication 1 ou la revendication 2; et
b) le mélange d'un tel pigment d'oxyde de fer dans de l'eau en une quantité de 20 à 95%; de manière à former ainsi la composition aqueuse.
